# EUROPÄISCHE PATENTSCHRIFT

(11) **EP 1 230 655 B1**
(45) Veröffentlichungstag und Bekanntmachung des Hinweises auf die Patenterteilung: **25.05.2005**
(21) Anmeldenummer: 00975948.1
(22) Anmeldetag: 27.10.2000
(51) Int. Cl.: H01G 9/042, H01G 9/052

(54) **KONDENSATORPULVER**
CAPACITOR POWDER
POUDRE POUR CONDENSATEURS

(30) Priorität: 09.11.1999 DE 19953946
(43) Veröffentlichungstag der Anmeldung: 14.08.2002
(73) Patentinhaber: H.C. Starck GmbH, 38642 Goslar (DE)
(72) Erfinder: REICHERT, Karlheinz, 38304 Wolfenbüttel (DE); THOMAS, Oliver, 38667 Bad Harzburg (DE); SCHNITTER, Christoph, 31188 Holle (DE)
(74) Vertreter: Zobel, Manfred, Dr.
(86) Internationale Anmeldenummer: PCT/EP2000/010622
(87) Internationale Veröffentlichungsnummer: WO 2001/035428

(56) Entgegenhaltungen:
- EP-A- 0 582 844
- GB-A- 2 106 938
- US-A- 3 849 124
- US-A- 3 867 129

## Beschreibung

Die vorliegende Erfindung betrifft ein Pulver zur Herstellung von Elektrolytkondensatoren, speziell ein Pulver zur Herstellung von Anoden für Elektrolytkondensatoren.

In der Literatur sind insbesondere die Erdsäuremetalle Niob und Tantal als Ausgangsmaterialien für die Herstellung derartiger Kondensatoren beschrieben. Die Herstellung der Kondensatoren erfolgt durch Versinterung der feinteiligen Pulver zur Erzeugung einer Struktur mit großer Oberfläche, Oxidation der Oberfläche des Sinterkörpers zur Erzeugung einer nicht leitenden Isolierschicht und Aufbringen der Gegenelektrode in Form einer Schicht aus Mangandioxid oder eines leitfähigen Polymeren. Die besondere Eignung der Erdsäuremetallpulver leitet sich aus der großen relativen Dielektrizitätskonstanten der Pentoxide ab. US-A-3 867 129 beschreibt Niob- oder Tantalpulver für Elektrolytkondensatoren, wobei die Oxidsperrschicht ein Metall aus Molybdän und/oder Vanadium und/oder Wolfram und/oder Hafnium enthält.

Technische Bedeutung für die Kondensatorherstellung hat bisher lediglich Tantalpulver erlangt. Dies beruht einerseits auf der reproduzierbaren Herstellbarkeit von feinteiligem Tantalpulver und andererseits darauf, dass die isolierende Oxidschicht aus Tantalpentoxid eine besonders ausgeprägte Stabilität besitzt. Dies beruht möglicherweise darauf, dass das Tantal im Gegensatz zu Niob kein stabiles Suboxid ausbildet.

Im Zuge der Entwicklung der Mikroelektronik gewinnen allerdings auch zunehmend Nachteile des Tantals an Bedeutung. Tantal besitzt einerseits eine sehr hohe Dichte von 16,6 g/cm³. Hierdurch wird die Tendenz zur Gewichtsreduktion insbesondere tragbarer elektronischer Geräte, wie Mobiltelefone usw., begrenzt. Aufgrund der nur halb so großen Dichte des Niobs im Vergleich zum Tantal können unter der Voraussetzung gleicher Geometrie und gleicher Eigenschaften der Oxidschicht etwa doppelt so hohe gewichtsbezogene spezifische Kapazitäten erzielt werden wie mit Tantalpulvern. Die die Kapazität eines Kondensators bestimmenden Materialeigenschaften der isolierenden Pentoxidschicht beim Niob einerseits und beim Tantal andererseits haben zum Teil gegenläufige Einflüsse.

So ist die Kapazität eines Kondensators um so höher, je höher die relative Dielektrizitätkonstante der Isolatorschicht ist. Sie ist um so niedriger, je dicker die für die jeweils bestimmungsgemäße Betriebsspannung erforderliche Dicke der Isolatorschicht ist. So wird die mit 41 höhere Dielektrizitätskonstante des Niobpentoxides im Vergleich zu 26 des Tantalpentoxides durch die größere erforderliche Dicke der Pentoxidschicht beim Niob im Vergleich zum Tantal kompensiert. Bei vorgegebener Anodisierspannung liegt das Dickenwachstum der Tantalpentoxidschicht bei etwa 2 nm/V und das der Niobpentoxidschicht bei etwa 3,7 nm/V. Die auf die Oberfläche der Kondensatoren bezogenen Kapazitäten sind demgemäß vergleichbar.

Der Einsatz von Niobkondensatoren ist bisher dem Bereich niedriger spezifischer Kapazitäten mit kleiner spezifischer Oberfläche und geringerer Qualität vorbehalten geblieben.

Aufgabe der vorliegenden Erfindung ist es, die Nachteile der bekannten Niobkondensatoren zu überwinden. Insbesondere ist es Aufgabe der vorliegenden Erfindung, die Niobpentoxid-Sperrschicht an Niobkondensatoren derart zu verbessern, dass höhere spezifische Kapazitäten realisierbar sind.

Es wurde gefunden, dass Niobpulver mit einer Oberflächenbeschichtung aus mindestens einem der Metalle Al, Si, Ti, Zr, Y und Ta in hervorragender Weise für die Herstellung von Niobkondensatoren geeignet sind. Insbesondere wurde gefunden, dass die spezifische Kapazität, bezogen auf die Oberfläche der Kondensatoranode, derartiger aus beschichtetem Niobpulver hergestellter Kondensatoren höher liegt als die von reinen Niobanoden und dass Niobanoden mit geringem Reststrom erhalten werden. Ferner liegen erste Anzeichen für eine mit Tantalanoden vergleichbare Langzeitstabilität vor.

Gegenstand der vorliegenden Erfindung sind demgemäss Niobpulver mit einer Oberflächenbeschichtung mindestens eines der Metalle Al, Si, Ti, Zr, Y und Ta.

Gegenstand der Erfindung sind auch aus Niob bestehende Sinteranoden für Kondensatoren, wobei die Anoden oberflächlich einen Gehalt von mindestens einem der Metalle Al, Si, Ti, Zr, Y und Ta aufweisen.

Gegenstand der Erfindung sind ferner mit einer Nioboxid-Sperrschicht versehene Sinteranoden aus Niob, wobei die Sperrschicht einen Gehalt von mindestens einem der Metalle Al, Si, Ti, Zr, Y und Ta aufweist.

Gegenstand der Erfindung sind weiterhin Elektrolytkondensatoren, die aus einer Niobanode, einer Nioboxid-Sperrschicht, einer halbleitenden Kathode und einem Elektrolyten bestehen, wobei die Nioboxid-Sperrschicht mindestens eines der Oberflächenmodifizierungselemente aufweist.

Bevorzugte Gehalte der Oberflächenmodifzierungselemente in der Sperrschicht liegen unterhalb 25 Atom-%, bezogen auf den Gesamt-Metallgehalt der Sperrschicht, insbesondere bevorzugt sind Gehalte von bis zu 20 Atom-%. Weiter bevorzugt sind Gehalte des Oberflächenmodifizierungselementes von 2 bis 15 Atom-% in der Oxid-Sperrschicht.

Bezogen auf das Niobpulver beträgt die Menge der Oberflächenbeschichtung vorzugsweise weniger als 18 Atom-%, insbesondere weniger als 15 Atom-%, weiter bevorzugt 1,5 bis 12 Atom-%.

Bevorzugte Oberflächenmodifizierungselemente sind Ti, Zr und Ta, insbesondere bevorzugt ist Ta.

Es wird angenommen, dass das Oberflächenmodifizierungselement des Niobpulvers auch bei der weiteren Verarbeitung zum Kondensator im wesentlichen auf der Oberfläche verbleibt, da die während der Weiterverarbeitung angewendeten Temperaturen von üblicherweise unterhalb 1250°C in Bezug auf den Schmelzpunkt von Niob von 2500°C für Festkörper-Diffusionen relativ niedrig sind.

Aufgrund der vorliegenden Erfindung wird es demgemäß ermöglicht, Niobkondensatoren herzustellen, die die zur Zeit höchstkapazitiven verfügbaren Tantalkondensatoren übertrifft. Derartige Tantalkondensatoren weisen spezifische Kapazitäten von 100 000 µFV/g bei Anodisierspannungen von beispielsweise 40 V auf. Ein erfindungsgemäßer Niobkondensator mit entsprechender Geometrie weist spezifische Kapazitäten von oberhalb 300 000 µFV/g auf. Insbesondere gelingt es, chemisch modifizierte Niobkondensatoren herzustellen, die eine auf die Kondensatorfläche bezogene spezifische Kapazität von mehr als 60 000 µFV/m², insbesondere mehr als 70 000 µFV/m², aufweisen.

Gegenstand der Erfindung ist auch das Verfahren zur Herstellung der erfindungsgemäßen Kondensatorpulver. Das Verfahren besteht darin, dass ein Niobpulver in der Lösung einer hydrolisierbaren oder zersetzbaren Verbindung des Oberflächenmodifizierungselementes getränkt wird, das Pulver von der Lösung abgetrennt wird, die an dem Pulver anhaftende Verbindung hydrolysiert oder zersetzt wird und anschließend das Hydrolysat zum Metall reduziert wird.

Als Niobpulver eignen sich Pulver, die durch Erhitzen von mittels Elektronenstrahl geschmolzenen Niobmetallingots in einer Wasserstoffatmosphäre, Mahlung des durch Wasserstoffaufnahme versprödeten Materials und Entfernung des Wasserstoffs durch Erhitzen im Vakuum erhalten wurden. Geeignet sind auch Niob-flakes gemäß WO 98/19811.

Ferner sind hochporöse Niobpulver geeignet, die nach nicht vorveröffentlichten Vorschlägen der Anmelderin gemäß DE 198 31 280, DE 198 47 012 und PCT 99/09772 durch Reduktion von Niobpentoxid in flüssigem oder gasförmigem Magnesium, gegebenenfalls nach vorheriger Reduktion zum Suboxid mittels Wasserstoff, erhalten wurden.

Als Niobpulver geeignet sind ferner Niobpulver, die eines oder mehrere der Metalle Al, Ti, Hf, Zr oder Ta als Legierungsbestandteile, d.h. in gleichmäßiger Verteilung in Mengen bis 5 Gew.-%, enthalten.

Die Aufbringung des Oberflächenrnodifizierungselementes wird nachfolgend am Beispiel des Tantal beschrieben:

Als zersetzbare bzw. hydrolisierbare Tantalverbindungen kommen insbesondere organische Tantalverbindungen in Frage, die in Wasser oder organischen Lösungsmitteln löslich sind. Als wasserlösliche organische Tantalverbindung ist Tantaloxalat geeignet. Ferner sind die alkohollöslichen Tantalalkoxide mit 1 bis 8 Kohlenstoffatomen wie Tantalmethoxid, Tantalethoxid, Tantalpropoxid, Tantalbutoxid usw. einschließlich Tantaloctoaten geeignet, ferner Organometallverbindungen des Tantals gemäß US-A 5,914,417.

Zur Erzeugung der dünnen Tantalschichten auf dem Niobpulver werden die organischen Tantalverbindungen vorzugsweise in verdünnten Lösungen eingesetzt, auch soweit diese an sich flüssig sind. Als Lösungsmittel geeignet ist Wasser, soweit die Tantalverbindung wasserbeständig ist. Die Alkoxide werden vorzugsweise in absolutem Alkohol oder in anderen organischen Lösungsmitteln mit so geringer Acidität, dass ohne Wasserzutritt keine Hydrolyse stattfindet, wie Toluol oder Benzol, eingesetzt. Bevorzugt zur Lösung der Alkoxide ist der jeweilige entsprechende Alkohol.

Die Konzentration der Tantalverbindung im jeweiligen Lösungsmittel beträgt vorzugsweise 1 bis 20 Gew.-%, insbesondere bevorzugt 1 bis 10 Gew.-% und weiter bevorzugt 1 bis 5 Gew.-%.

Das Niobpulver wird in der Lösung der organischen Tantalverbindung suspendiert und zur Gewährleistung einer guten Benetzung eine Zeit lang stehengelassen. Typischerweise kann dies 10 Minuten bis 1 Stunde betragen. Um eine gute Durchdringung von porösem Niobpulver bzw. Niobpulveragglomeraten zu gewährleisten, kann es zweckmäßig sein, das Niobpulver in einem Vakuumbehälter unter Vakuum zu setzen, den Behälter gegebenenfalls mit Lösungsmitteldämpfen zu spülen und anschließend in das evakuierte Gefäß die Behandlungslösung einzuleiten.

Die Abtrennung des behandelten Niobpulvers von der Lösung kann durch Filtrieren, Zentrifugieren oder Dekantieren erfolgen.

Im Falle des Einsatzes von Tantalalkoxiden werden diese vorsichtig an Luft ohne Feuchtigkeitsausschluss bzw. in angefeuchteter Luft hydrolisiert, vorzugsweise unter leichter Erwärmung auf 50 bis 100°C. Gegebenenfalls kann gegen Ende der Behandlung Wasserdampf zur Vervollständigung der Hydrolyse eingeleitet werden. Im Falle des Einsatzes von Tantaloxalat wird die Hydrolyse in einer wässrigen alkalischen Lösung durchgeführt, beispielsweise einer Ammoniak-Lösung oder Natriumhydroxid-Lösung. Besonders bevorzugt erfolgt die Hydrolyse in einem ammoniakhaltigen Gasstrom.

Zur Erzeugung einer gleichmäßig anhaftenden Tantaloxidbeschichtung soll die Hydrolyse allmählich über mehrere Stunde erfolgen.

Die Tauchung und Hydrolyse kann mehrfach wiederholt werden. Bevorzugt ist es, die Tauchung des Niobpulvers in weniger konzentrierten Lösungen, dafür aber mehrfach vorzunehmen.

Nach einem gegebenenfalls zwischengeschalteten Trocknungsschritt wird das derart behandelte Niobpulver vorzugsweise mit einem Gettermetall mit ausreichendem hohen Dampfdruck bei 850 bis 1000°C reduziert. Als Gettermetall geeignet sind: Magnesium, Calcium, Strontium, Barium, Aluminium und/oder Lanthan. Wesentlich ist, dass sich die bei der Reduktion bildenden Oxide mit Mineralsäuren leicht auswaschen lassen. Besonders bevorzugtes Reduktionsmittel ist Magnesium.

Die so reduzierten, mit Mineralsäuren gewaschenen und anschließend mit demineralisiertem Wasser säurefrei gewaschenen und getrockneten Niobpulver werden in geeigneten Matritzen bis zu einer Pressdichte von 2,5 bis 3,5 g/cm³ zu Pellets gepresst und anschließend bei 1100 bis 1250°C in an sich bekannter Weise gesintert. Die gesinterten Anoden werden mit einem Tantal- und/oder Niobdraht, vorzugsweise einem Niobdraht, kontaktiert, sofern der Kontaktdraht nicht bereits beim Pressen in die Matrize eingeschoben wurde.

Anschließend wird in an sich bekannter Weise in 0,1 %iger Phosphorsäure bis zu der gewünschten Formierspannung formiert.

Zur Herstellung von Titanbeschichtungen ist eine wässrige Lösung von TiOSO₄ geeignet, die mittels einer wässrigen Base, z.B. Ammoniak, hydrolysiert wird, oder reines TiCl₄, welches anschließend mit Wasserdampf hydrolysiert wird.

### Beispiele 1 bis 7

Es wird ein hochreines Niobpulver eingesetzt, das durch Magnesiumdampfreduktion von Niobsuboxid NbO₂ nach DE-A 19 831 280 erhalten wurde. Das Pulver hat eine spezifische Oberfläche nach BET von 3,02 m²/g. Verschiedene Probemengen werden in eine Ethanollösung, enthaltend die in Tabelle 1 angegebene Tantalethoxidmenge, getaucht. Eine Vergleichsprobe wird in reiner Ethanollösung behandelt. Nach 30 min werden die Probemengen von der jeweiligen Lösung durch Filtrieren abgetrennt und 15 min an Umgebungsluft stehengelassen.

Anschließend werden die Proben 45 min bei 95°C getrocknet, mit 80°C warmen demineralisiertem Wasser nachgewaschen und erneut getrocknet.

Danach werden die Proben unter Argon-Atmosphäre mit Magnesium-Dampf bei 850°C bis 950°C (Temperaturgefälle im Ofen) reduziert.

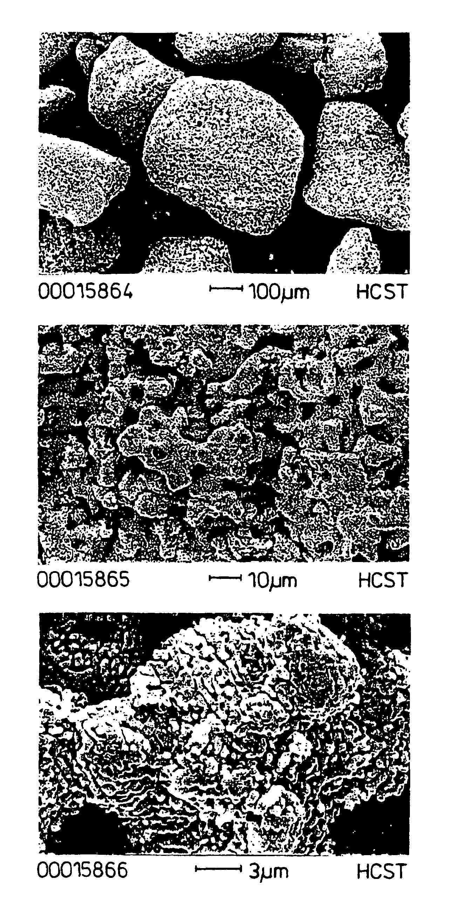

Fig. 1 zeigt eine REM-Aufnahme in unterschiedlicher Vergrößerung der Probe 1 gemäß Tabelle 1.

Die Analysenwerte für Ta, C, H und O sowie die spezifische Oberfläche der Proben sind in Tabelle 1 angegeben.

Die Proben werden in üblicher Weise um einen Niobdraht bei einer Pressdichte von 3,14 g/cm³ zu Anodenpellets verpresst und 20 min lang bei 1 150°C gesintert. Die gesinterten Anoden werden in 0,1 %iger Phosphorsäure bis zu einer Formierungsspannung von 40 V formiert.

Die Kondensatoreigenschaften werden in 30 %iger Schwefelsäure als Katholyt bei einer Bias-Spannung von 1,5 V bestimmt.
Die Ergebnisse sind in Tabelle 1 angegeben.

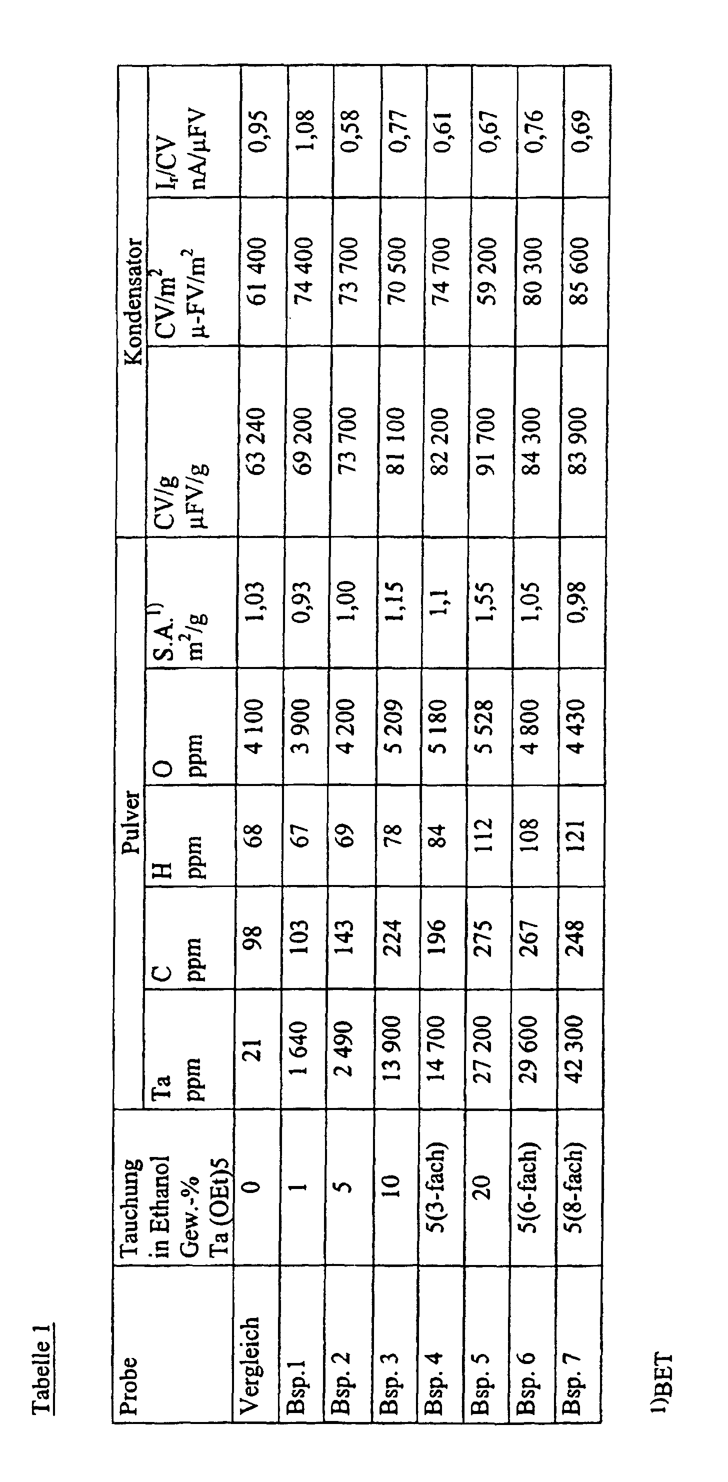

## Patentansprüche

1. Elektrolytkondensator enthaltend eine Niobanode, eine Nioboxid-Sperrschicht, eine halbleitende Kathode und einen Elektrolyten, wobei die Nioboxid-Sperrschicht mindestens ein Metall aus der Gruppe Al, Si, Ti, Zr, Y und Ta enthält.

2. Kondensator nach Anspruch 1, wobei das Metall Tantal ist.

3. Kondensator-Anode bestehend aus gesintertem Niobpulver mit einer durch anodische Oxidation erzeugten Sperrschicht, wobei die Sperrschicht mindestens eines der Metalle Al, Si, Ti, Zr, Y und/oder Ta enthält.

4. Kondensatorpulver bestehend im wesentlichen aus Niob mit einer Oberflächenbeschichtung, **dadurch gekennzeichnet, dass** die Oberflächenbeschichtung mindestens eines der Metalle Al, Si, Ti, Zr, Y und/oder Ta enthält.

5. Verfahren zur Herstellung eines Kondensatorpulvers nach Anspruch 4 durch Tränkung eines gegebenenfalls legierten Niobpulvers in einer Lösung einer hydrolysierbaren oder zersetzbaren Verbindung mindestens eines der Metalle Al, Si, Ti, Zr, Y und/oder Ta, Abtrennen des Pulvers von der Lösung, Hydrolysieren oder Zersetzen der anhaftenden Verbindung und gegebenenfalls Reduktion des Hydrolysates zum Metall.

## Claims

1. Electrolyte capacitor comprising a niobium anode, a niobium oxide barrier layer, a semiconducting cathode and an electrolyte, where the niobium oxide barrier layer comprises at least one metal from the group consisting of Al, Si, Ti, Zr, Y and Ta.

2. Capacitor according to Claim 1, where the metal is tantalum.

3. Capacitor anode consisting of sintered niobium powder with a barrier layer produced by anodic oxidation, where the barrier layer comprises at least one of the metals Al, Si, Ti, Zr, Y and/or Ta.

4. Capacitor powder consisting essentially of niobium having a surface coating, **characterized in that** the surface coating comprises at least one of the metals Al, Si, Ti, Zr, Y and/or Ta.

5. Process for the production of a capacitor powder according to Claim 4 by soaking of an optionally alloyed niobium powder in a solution of a hydrolysable or decomposable compound of at least one of the metals Al, Si, Ti, Zr, Y and/or Ta, removal of the powder from the solution, hydrolysis or decomposition of the adhering compound, and, if desired, reduction of the hydrolysate to the metal.

## Revendications

1. Condensateur électrochimique contenant une anode de niobium, une couche barrière d'oxyde de niobium, une cathode semiconductrice et un électrolyte, la couche barrière d'oxyde de niobium contenant au moins un métal parmi Al, Si, Ti, Zr, Y et Ta.

2. Condensateur selon la revendication 1, le métal étant le tantale.

3. Anode de condensateur constituée de poudre de niobium frittée avec une couche barrière produite par oxydation anodique, la couche barrière contenant au moins un des métaux Al, Si, Ti, Zr, Y et/ou Ta.

4. Poudre de condensateur constituée essentiellement de niobium avec un revêtement de surface, **caractérisée en ce que** le revêtement de surface contient au moins un des métaux Al, Si, Ti, Zr, Y et/ou Ta.

5. Procédé pour la préparation d'une poudre de condensateur selon la revendication 4 par imprégnation d'une poudre de niobium, éventuellement alliée dans une solution d'un composé hydrolysable ou décomposable d'au moins un des métaux Al, Si, Ti, Zr, Y et/ou Ta, par séparation de la poudre de la solution, par hydrolyse ou décomposition du composé collant et éventuellement par réduction de l'hydrolysat en métal.
